# FASCICULE DE BREVET EUROPEEN

(11) **EP 3 332 118 B1**
(45) Date de publication et mention de la délivrance du brevet: **11.09.2019**
(21) Numéro de dépôt: 16742409.2
(22) Date de dépôt: 13.07.2016
(51) Int. Cl.: G01F 1/36, F04B 9/10, F04B 13/02, F04B 43/067

(54) **DISPOSITIF DE DOSAGE PROPORTIONNEL SUPERVISE ET PROCEDES DE SUPERVISION D'UNE POMPE DOSEUSE**
ÜBERWACHTE PROPORTIONALE DOSIERVORRICHTUNG UND VERFAHREN ZUR ÜBERWACHUNG EINER DOSIERPUMPE
SUPERVISED PROPORTIONAL METERING DEVICE AND METHODS FOR MONITORING A METERING PUMP

(30) Priorité: 06.08.2015 FR 1557578
(43) Date de publication de la demande: 13.06.2018
(73) Titulaire: DOSATRON INTERNATIONAL, 33370 Tresses (FR)
(72) Inventeur: LUCAS, Grégory, 33450 Saint-Loubes (FR); CHARRIERE, Christophe, 33360 Camblanes et Meynac (FR)
(74) Mandataire: IPAZ
(86) Numéro de dépôt international: PCT/IB2016/054171
(87) Numéro de publication internationale: WO 2017/021801

(56) Documents cités:
- EP-A1- 2 359 932
- WO-A1-2012/046162
- GB-A- 2 303 885

## Description

L'invention est relative à un dispositif de dosage proportionnel supervisé comprenant une pompe du type comportant un moteur hydraulique et un ensemble de moyens de détection du fonctionnement de ladite pompe. L'invention est également relative à un ensemble de procédés de mise en oeuvre d'un tel dispositif de dosage pour la supervision de la pompe doseuse.

Il est connu de contrôler le fonctionnement de ce type de pompe. A titre d'exemple, le document FR2965864 A1 décrit une pompe doseuse du type comportant un ajutage d'aspiration muni d'un premier clapet d'aspiration communiquant avec une chambre de travail dans laquelle un piston peut être déplacé selon un mouvement alternatif, une aspiration étant produite, avec ouverture du clapet d'aspiration, lorsque le piston s'éloigne de l'ajutage, et un refoulement, avec fermeture du premier clapet d'aspiration et sortie de liquide au travers d'un clapet de sortie, étant produit lorsque le piston se rapproche de l'ajutage. Cette pompe comporte plus particulièrement entre le premier clapet d'aspiration et la chambre de travail un dispositif apte à détecter les variations de la pression dans l'ajutage, ce dispositif comprenant d'une part un conduit raccordé à une extrémité à la chambre de travail et muni à son autre extrémité du clapet d'aspiration, et d'autre part des moyens sensibles à la pression dans le conduit, monté dans la paroi du conduit. A partir des variations de pression enregistrées par le dispositif, il est alors possible, moyennant un traitement informatique des données, de déterminer différents paramètres de fonctionnement, tels que le calcul du dosage en temps réel, le temps d'utilisation de la pompe doseuse, la consommation de produit chimique, et également le nombre de pannes.

Toutefois, il s'avère que la détection des variations de pression n'est pas toujours fiable lorsque les débits qui alimentent l'ajutage d'aspiration sont faibles. A cette difficulté, s'ajoute aussi le fait que le dispositif apte à détecter les variations de la pression développé dans le document FR2965864 A1 présente des faiblesses lorsque le dosage met en oeuvres des solutions médicamenteuses chargées en poudres dont la dilution est aléatoire. Enfin, ce dispositif est entièrement focalisé sur la fiabilité de l'aspiration par de la pompe doseuse, laissant de côté les problématiques de dysfonctionnement du moteur hydraulique.

C'est pourquoi, l'objet de l'invention est de palier tout ou partie des inconvénients énoncés précédemment en proposant un dispositif et un ensemble de procédés, permettant de superviser de manière plus complète le fonctionnement des pompes doseuse, dans notamment des applications à faible débit.

Plus particulièrement, l'invention a pour objet un dispositif de dosage proportionnel supervisé comprenant une pompe doseuse de liquide dotée d'une entrée, d'une sortie, d'un ajutage d'aspiration muni d'un premier clapet d'aspiration et communiquant en l'une de ses extrémités avec une chambre de mélange intérieure à la pompe et en l'autre de ses extrémités avec un contenant de produit à aspirer, et d'un moteur hydraulique comportant un organe propre à effectuer un mouvement alternatif, l'alimentation de la pompe en liquide en entrée déclenchant le mouvement alternatif de l'organe, lequel mouvement provoquant alternativement une aspiration à travers l'ajutage jusque dans la chambre de mélange avec ouverture du premier clapet d'aspiration lorsque l'organe s'éloigne de l'ajutage puis une expulsion en sortie de la pompe avec fermeture du premier clapet d'aspiration lorsque l'organe se rapproche de l'ajutage, le dispositif de dosage comprenant également un mécanisme pour ajuster le débit dans l'ajutage, caractérisée en ce que le dispositif de dosage comprend en outre un ensemble de moyens de détection, ledit ensemble comptant au moins :
- des moyens pour détecter la variation de pression dans l'ajutage, disposés entre le premier clapet d'aspiration et la chambre de mélange,
- une sonde de mesure du niveau du contenant de produit à aspirer,
- des moyens pour déterminer la position du mécanisme d'ajustage du volume aspiré,
- une interface Homme / Machine pour traiter, enregistrer et visualiser les données issues des moyens de détection.

Des caractéristiques optionnelles de l'invention, complémentaires ou de substitution sont énoncées ci-après.

Le dispositif de dosage proportionnel supervisé peut comprendre un compteur d'eau en entrée,

Les moyens pour détecter la variation de pression dans l'ajutage peuvent comprendre au moins un premier volume en communication de fluide avec l'intérieur de l'ajutage, un second volume clos et contigu au premier tout en en étant séparé par une membrane souple, un capteur de la pression dans le second volume, de sorte que les variations en alimentation en fluide du premier volume induisent des déformations de la membrane, et par voie de conséquence des variations de pression dans le second volume clos.

Le capteur de pression peut être un capteur de type piézoélectrique ou capacitif.

Un second clapet d'aspiration peut être disposé à l'entrée de la chambre de travail.

L'interface Homme / Machine peut comprendre une sortie apte à être connectée à un mécanisme d'alarme.

L'ensemble de moyens de détection peut comprendre un moyen de comptage des cycles du moteur hydraulique.

L'invention a également pour objet un premier procédé de supervision d'une pompe doseuse mettant en oeuvre un dispositif de dosage proportionnel conforme à l'invention, ledit dispositif comprenant un moyen de comptage des cycles du moteur hydraulique et un compteur d'eau en entrée, caractérisée en ce qu'il comprend :
- Une étape au cours de laquelle on mesure la position du mécanisme d'ajustage du volume aspiré,
- Une étape ultérieure au cours de laquelle, la pompe étant en fonctionnement, on détermine sur une durée T0, le volume d'eau admis en entrée de la pompe, et la variation de volume de produit dans le contenant,
- Une étape ultérieure dans laquelle on calcule la valeur théorique de produit aspiré sur la durée T0 à partir de la position mesurée pour le mécanisme d'ajustage et du volume d'eau admis en entrée de la pompe,
- Une étape ultérieure dans laquelle on compare la valeur théorique de produit aspiré sur la durée T0 avec la variation de volume de produit dans le contenant.

Des caractéristiques optionnelles de l'invention, complémentaires ou de substitution sont énoncées ci-après.

Selon certaines caractéristiques, la détermination sur une durée T0, du volume d'eau admis en entrée de la pompe s'effectue par une mesure avec le compteur d'eau.

Selon d'autres caractéristiques, la détermination sur une durée T0, du volume d'eau admis en entrée de la pompe s'effectue par une estimation à partir du moyen de comptage des cycles du moteur hydraulique.

Selon d'autres caractéristiques encore, la détermination sur une durée T0, de la variation de volume de produit dans le contenant s'effectue par une mesure avec la sonde de mesure du niveau du contenant.

Selon d'autres caractéristiques encore, la détermination sur une durée T0, de la variation de volume de produit dans le contenant s'effectue par une estimation à partir des moyens pour détecter la variation de pression dans l'ajutage.

L'invention a également pour objet un second procédé de supervision d'une pompe doseuse mettant en oeuvre un dispositif de dosage proportionnel conforme à l'invention, ledit dispositif comprenant un moyen de comptage des cycles du moteur hydraulique et un compteur d'eau en entrée, caractérisée en ce qu'il comprend :
- Une étape au cours de laquelle, la pompe étant en fonctionnement, on mesure avec le compteur d'eau sur une durée T0, le volume d'eau admis en entrée de la pompe,
- Une étape au cours de laquelle on estime le volume d'eau admis en entrée de la pompe sur la durée T0 à partir du nombre de cycles comptés pour le moteur hydraulique,
- Une étape ultérieure dans laquelle on compare la valeur estimée du volume d'eau admis en entrée de la pompe sur la durée T0 avec la valeur mesurée.

L'invention a également pour objet un troisième procédé de supervision d'une pompe doseuse mettant en oeuvre un dispositif de dosage proportionnel conforme à l'invention, ledit dispositif comprenant un moyen de comptage des cycles du moteur hydraulique, caractérisée en ce qu'il comprend :
- Une étape au cours de laquelle, on compte le nombre de cycles du moteur hydraulique, la pompe étant en fonctionnement,
- Une étape au cours de laquelle on détermine le nombre de cycles d'aspiration avec les moyens de détection des variations de pression dans l'ajutage,
- Une étape ultérieure dans laquelle on compare le nombre de cycles du moteur hydraulique avec le nombre de cycles d'aspiration.

L'invention a également pour objet un quatrième procédé de supervision d'une pompe doseuse mettant en oeuvre un dispositif de dosage proportionnel conforme à l'invention, ledit dispositif comprenant un moyen de comptage des cycles du moteur hydraulique, caractérisée en ce qu'il comprend :
- Une étape au cours de laquelle on mesure la position du mécanisme d'ajustage du volume aspiré,
- Une étape au cours de laquelle, la pompe étant en fonctionnement, on estime sur une durée T0 et avec les moyens de détection des variations de pression dans l'ajutage, la variation de volume de produit dans le contenant,

Des caractéristiques optionnelles de l'invention, complémentaires ou de substitution sont énoncées ci-après. Selon certaines caractéristiques, le procédé comprend :
- Une étape au cours de laquelle, la pompe étant en fonctionnement, on mesure avec la sonde sur une durée T0, la variation de volume de produit dans le contenant,
- Une étape ultérieure dans laquelle on compare la valeur estimée de produit aspiré sur la durée T0 avec la variation de volume de produit dans le contenant.

De manière générale, l'invention s'applique à une large plage de débit d'eau en entrée, ces débits pouvant être compris entre 5 L/H et 30 m³/H, le débit dans l'ajutage (16) étant compris entre 0,02 L/H et 600 L/H.

De manière avantageuse, les procédés de supervision précités peuvent prévoir qu'une alarme est déclenchée en cas de non-conformité dans les étapes de comparaison.

D'autres avantages et particularités de l'invention apparaîtront à la lecture de la description détaillée de mises en oeuvre et de modes de réalisation nullement limitatifs, et des dessins annexés suivants :
- la FIGURE 1 est une représentation schématique d'un dispositif de dosage proportionnel supervisé conforme à un mode de réalisation de l'invention,
- la FIGURE 2 est une représentation d'un détail d'un tel dispositif de dosage.
- la FIGURE 3 est une représentation d'un autre détail d'un tel dispositif de dosage.

Les modes de réalisation décrits ci-après étant nullement limitatifs.

A des fins de concision et de clarté, les éléments portent les mêmes références sur les différentes figures.

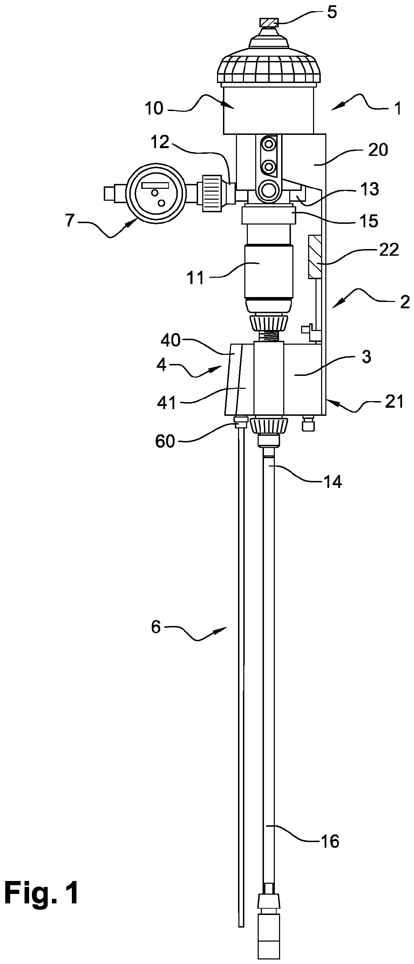

La figure 1 représente un mode de réalisation d'un dispositif de dosage proportionnel supervisé. Ce dernier comporte une pompe doseuse de liquide 1 dotée d'une entrée 12, d'une sortie 13, et d'un ajutage 16 d'aspiration. Cet ajutage d'aspiration est muni d'un premier clapet d'aspiration 14 communiquant en l'une de ses extrémités avec une chambre de mélange intérieure à la pompe (non représentée sur la figure) et en l'autre de ses extrémités avec un contenant de produit à aspirer (non représenté sur la figure).

La pompe doseuse 1 est du type qui comporte un moteur hydraulique doté d'un organe propre à effectuer un mouvement alternatif, l'alimentation de la pompe en liquide en entrée déclenchant le mouvement alternatif de l'organe, lequel mouvement provoquant alternativement une aspiration à travers l'ajutage jusque dans la chambre de mélange avec ouverture du premier clapet d'aspiration 14 lorsque l'organe s'éloigne de l'ajutage 16 puis une expulsion en sortie 13 de la pompe avec fermeture du premier clapet d'aspiration lorsque l'organe se rapproche de l'ajutage.

Le moteur hydraulique peut être du type de celui décrit dans le document EP1971776 A1.

Ce moteur hydraulique comprend une enveloppe comportant un corps et un couvercle, un moyen de séparation propre à effectuer un mouvement alternatif dans l'enveloppe entre le corps et le couvercle, ce moyen de séparation définissant deux chambres. Le moteur hydraulique comprend aussi des moyens de commutation hydraulique pour l'alimentation en liquide et l'évacuation des chambres précitées. Ces moyens de commutation comprennent un organe de distribution pouvant prendre deux positions stables et commandé par les déplacements du moyen de séparation. Le corps de l'enveloppe renferme par ailleurs un compartiment relié à une arrivée de liquide sous pression et dans lequel sont logés les moyens de commutation, ainsi que des moyens de déclenchement comprenant un poussoir lié au moyen de séparation, propres à provoquer, en fin de course, un changement brusque de la position des moyens de commutation, sous l'action d'un moyen élastique, pour l'inversion de la course. L'organe de distribution comprend un tiroir de distribution appliqué contre une plaque plane fixe relativement au corps de l'enveloppe, le tiroir de distribution pouvant coulisser de manière étanche, sans joint, contre la plaque qui comporte des orifices reliés respectivement aux chambres de l'enveloppe et à un orifice de sortie du liquide. Le tiroir est alors prévu pour, selon sa position, fermer certains des orifices ou les mettre en communication avec l'arrivée de fluide ou avec l'échappement.

Le moteur hydraulique peut être aussi du type de celui décrit dans le document EP1971774 A1.

Dans ce cas, le moteur hydraulique comprend une enveloppe, un piston propre à coulisser en mouvement alternatif dans l'enveloppe, le piston séparant l'enveloppe en deux chambres, des moyens de commutation hydraulique pour l'alimentation en liquide et l'évacuation des chambres séparées par le piston. Ces moyens de commutation sont commandés par les déplacements du piston et comportent au moins une biellette agissant sur un organe de distribution pouvant prendre deux positions stables. Il est en outre prévu des moyens de déclenchement comprenant un poussoir propre à provoquer, en fin de course du piston, un changement brusque de la position des moyens de commutation, sous l'action d'un moyen élastique, pour l'inversion de la course. Le moyen élastique est solidaire, à chacune de ses extrémités, d'un organe d'articulation reçu respectivement dans un logement prévu sur la biellette et sur une autre pièce mobile du moteur hydraulique, chaque logement étant ouvert suivant une direction sensiblement opposée au sens de l'effort exercé par le moyen élastique dans le logement, de sorte que chaque organe d'articulation peut être extrait de son logement ouvert à l'encontre dudit effort.

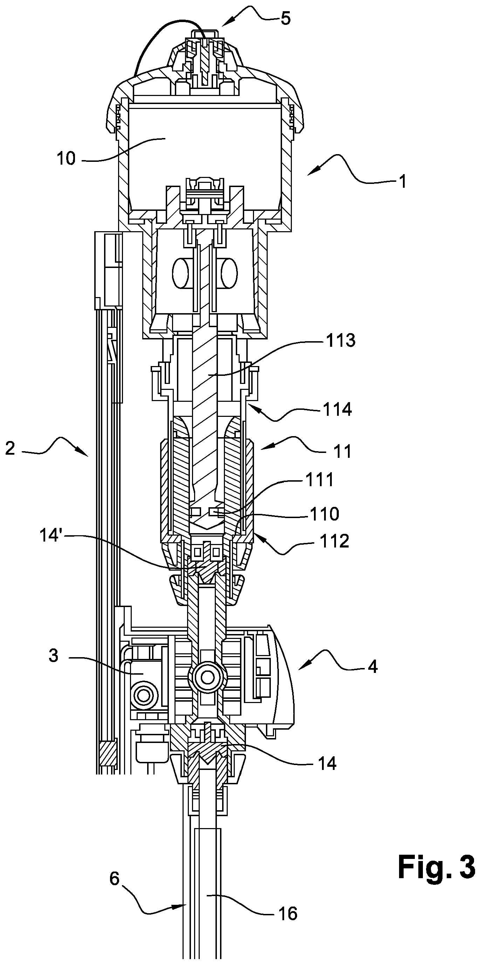

Le dispositif de dosage comprenant également un mécanisme 11 pour ajuster le volume aspiré dans l'ajutage 16. Ce mécanisme est décrit en figure 3 et fait intervenir un écrou 112 de réglage qui entraine le corps de la pompe doseuse 110 dans sa chemise 114. Comme au point mort haut du moteur hydraulique, le plongeur 113 et le joint 111 de dosage quittent le corps de la pompe doseuse 110, la course de dosage est donc plus ou moins longue. De ce fait, le volume aspiré est plus ou moins important. Le volume d'eau pour un cycle étant quasi-constant, le dosage est plus ou moins fort.

Le dispositif de dosage comprend en outre un ensemble de moyens de détection, ledit ensemble comptant au moins les éléments listés ci-après, à savoir :
- des moyens 3 sont prévus pour détecter la variation de pression dans l'ajutage 16, disposés entre le premier clapet d'aspiration 14 et la chambre de mélange,
- une sonde 6 de mesure du niveau du contenant de produit à aspirer,
- des moyens 22 pour déterminer la position du mécanisme d'ajustage du volume à aspirer 11,
- une interface Homme / Machine 4 pour traiter, enregistrer et visualiser les données issues des moyens de détection.

Concernant les moyens pour détecter les variations de pression dans l'ajutage, on pourra employer une membrane installée sur une portion de paroi de l'ajutage, et des moyens de détection des déplacements de la membrane par suite des variations de pression.

Les moyens de détection des déplacements de la membrane peuvent être du type de ceux décrits dans la demande WO20012/046162. Il peut alors comprendre un capteur optique observant les déplacements d'un palpeur actionné par un doigt lié à la membrane. Les moyens de détection des déplacements de la membrane peuvent également comprendre un capteur de déplacement de nature inductive, en particulier à effet Hall.

Avantageusement, les moyens de détection des déplacements de la membrane mettent en oeuvre des matériaux insensibles aux potentielles agressions chimiques des solutions utilisées.

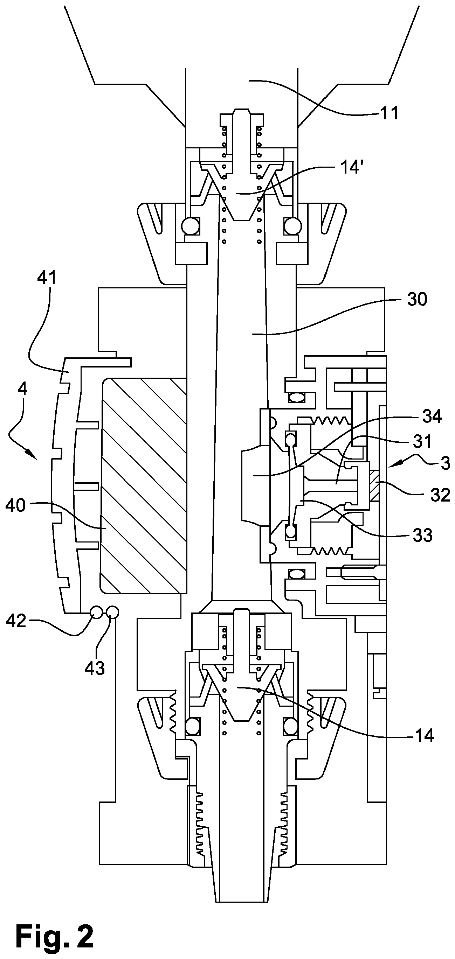

Avantageusement, les moyens pour détecter les variations de pression pourront préférablement comprendre, tel que représenté en figure 2, au moins un premier volume 34 en communication de fluide avec l'intérieur de l'ajutage, un second volume 31 clos et contigu au premier tout en en étant séparé par une membrane souple 33, et un capteur 32 de pression dans le second volume. De cette façon, lorsque des variations interviennent dans l'alimentation en liquide dans le premier volume 34, c'est-à-dire lorsque du liquide est pompé depuis le contenant vers la chambre de travail de la pompe 1, des déformations de la membrane apparaissent. Par voie de conséquence, le volume du second volume clos 31 varie et de ce fait, le gaz emprisonné dans ce volume clos voit sa pression varier. Ce sont ces variations de pression que le capteur 32 enregistre. Cette configuration présente l'avantage particulier de détecter des variations de pression très faibles, ce qui n'est pas toujours possible avec les dispositifs connus de l'art antérieur.

Avantageusement, un second clapet d'aspiration 14' est disposé à l'entrée de la chambre de travail. De cette manière, la variation de liquide dans l'ajutage est bien liée au cycle, et tributaire de l'ouverture et de la fermeture quasi synchrone des clapets 14 et 14'. En d'autres termes, la variation de pression dans l'ajutage 16 n'est pas perturbée par des phénomènes de reflux ou autre provenant de la chambre de travail.

Le capteur de pression peut être un capteur de type piézoélectrique ou bien capacitif.

Avantageusement, un compteur d'eau 7 peut être disposé en entrée 12 de la pompe doseuse. De cette façon, la supervision du dispositif peut être étendue.

Concernant, le compteur d'eau 7 en entrée 12, d'autres moyens tout aussi usuels pourront être employés en remplacement de ce dernier.

La sonde 6 apte à mesurer le niveau du contenant dans lequel est stocké le liquide à aspirer, peut consister en un tube, distinct de l'ajutage, dont une extrémité est prévue pour plonger dans le contenant, et dont l'autre extrémité est maintenue fixe relativement à l'ajutage d'aspiration, pour se trouver hors du contenant. Cette autre extrémité est fermée et munie d'un capteur de la pression d'air dans le tube, lequel capteur fournit en sortie un signal électrique.

Les moyens pour déterminer la position du mécanisme d'ajustage du volume à aspirer 11, peuvent consister en un capteur de position 22 monté sur la partie mobile 21 d'un châssis 2, solidaire du corps de la pompe en sa partie fixe 20.

L'interface Homme / Machine 4 comporte un écran 41 muni de touches permettant de traiter, enregistrer et visualiser les données issues des moyens de détection. Les opérations de traitement, enregistrement et visualisation sont assurées par un processeur 40.

Avantageusement, une sortie USB 43 peut être agencée de manière à permettre le transfert des données, l'enregistrement en mémoire et la mise à jour logiciel. De même, l'interface Homme / Machine comprend une sortie 42 apte à être connectée à un mécanisme d'alarme.

De façon optionnelle, l'ensemble de moyens de détection peut comprend un moyen de comptage 5 des cycles du moteur hydraulique. Ce moyen peut prendre la forme d'un interrupteur de type « reed », ce dernier permettant de compter le nombre de mouvements alternatifs du moyen de séparation dans le document EP1971776 A1, ou bien du piston dans le document EP1971774 A1.

Le dispositif de dosage proportionnel tel que décrit précédemment peut être mis en oeuvre de manière à superviser différents points de fonctionnement de la pompe doseuse 1.

Selon les étapes mises en oeuvre, il est possible de contrôler si le dosage réel est bien celui qui avait été initialement requis lors du réglage du mécanisme d'ajustage de volume à aspirer 11. Il est également possible de contrôler s'il n'y a pas de dysfonctionnement au niveau du moteur hydraulique, au niveau de l'aspiration effectué par la pompe doseuse, ou bien de vérifier si le contenant d'additif n'est tout simplement pas vide.

La mise en oeuvre d'un dispositif de dosage proportionnel conforme à l'invention, ledit dispositif comprenant un moyen de comptage des cycles du moteur hydraulique, peut permettre de contrôler le dosage comme suit.

Dans une première étape, on mesure la position du mécanisme d'ajustage de volume aspiré, afin de définir quel dosage a été choisi. Cette mesure est effectuée avec les moyens 22 pour déterminer la position du mécanisme d'ajustage de volume à aspirer 11.

Dans une étape ultérieure au cours de laquelle la pompe est en fonctionnement, on détermine sur une durée T0, le volume d'eau admis en entrée de la pompe, et la variation de volume de produit dans le contenant.

Selon une variante, la détermination sur une durée T0 du volume d'eau admis en entrée de la pompe, s'effectue par une mesure directe moyennant le compteur d'eau 7.

Alternativement, la détermination sur une durée T0 du volume d'eau admis en entrée de la pompe, s'effectue par une estimation à partir du moyen de comptage 5 des cycles du moteur hydraulique.

La variation de volume de produit dans le contenant peut être estimée quant à elle à partir des moyens 3 pour détecter la variation de pression dans l'ajutage.

Alternativement, la variation de volume de produit dans le contenant peut être mesurée directement avec la sonde 6 de mesure du niveau du contenant.

Ensuite, on calcule la valeur théorique de produit aspiré sur la durée T0 à partir de la position mesurée pour le mécanisme d'ajustage et du volume d'eau admis en entrée de la pompe,

Enfin, on compare la valeur théorique de produit aspiré sur la durée T0 avec la variation de volume de produit dans le contenant, les deux valeurs devant être identiques.

La mise en oeuvre d'un dispositif de dosage proportionnel conforme à l'invention, ledit dispositif comprenant un moyen de comptage des cycles du moteur hydraulique, peut aussi permettre de superviser le fonctionnement du moteur hydraulique de la pompe doseuse.

Dans une étape au cours de laquelle, la pompe étant en fonctionnement, on mesure avec le compteur d'eau 7 sur une durée T0, le volume d'eau admis en entrée de la pompe.

Puis, on estime le volume d'eau admis en entrée de la pompe sur la durée T0 à partir du nombre de cycles comptés pour le moteur hydraulique sur la durée T à partir du moyen de comptage 5 des cycles du moteur hydraulique.

Enfin, on compare la valeur estimée du volume d'eau admis en entrée de la pompe sur la durée T0 avec la valeur mesurée, les deux valeurs devant être identiques.

Ce type de supervision permet de mettre en évidence le fonctionnement défectueux du moteur hydraulique (fuites, casse de pièces, etc ...).

La mise en oeuvre d'un dispositif de dosage proportionnel conforme à l'invention, ledit dispositif comprenant en outre un moyen 5 de comptage des cycles du moteur hydraulique, peut aussi permettre de superviser le fonctionnement de la pompe doseuse.

Tout d'abord, on compte le nombre de cycles du moteur hydraulique, la pompe étant en fonctionnement.

Puis on détermine le nombre de cycles d'aspiration avec les moyens de détection 3 des variations de pression dans l'ajutage,

Enfin, on compare le nombre de cycles du moteur hydraulique avec le nombre de cycles d'aspiration, les deux valeurs devant être identiques.

La mise en oeuvre d'un dispositif de dosage proportionnel conforme à l'invention, peut aussi permettre de superviser le fonctionnement de la pompe doseuse, et ce, sans avoir recours à un moyen de comptage de cycles 5.

Ce procédé de supervision comprend :
- Une étape au cours de laquelle on mesure la position du mécanisme d'ajustage de volume aspiré avec les moyens 22,
- Une étape au cours de laquelle, la pompe étant en fonctionnement, on estime sur une durée T0 et avec les moyens 3 de détection des variations de pression dans l'ajutage, la variation de volume de produit dans le contenant,
- Une étape au cours de laquelle, la pompe étant en fonctionnement, on mesure avec la sonde 6 sur une durée T0, la variation de volume de produit dans le contenant,
- Une étape ultérieure dans laquelle on compare la valeur estimée de produit aspiré sur la durée T0 avec la variation de volume de produit dans le contenant, ces deux valeurs devant être identiques.

De manière avantageuse, les procédés peuvent comprendre une étape d'alerte en cas de non-conformité dans les résultats de comparaison. Ceci est rendu possible grâce à l'interface Homme / Machine qui comprend une sortie 42 apte à être connectée à un mécanisme d'alarme.

A titre comparatif, la Demanderesse a comparé le dispositif de l'invention avec un dispositif comportant un débitmètre à palette et avec un dispositif comportant un flow Switch. Il s'est en particulier agit de déterminer si les moyens de détection des variations de pression dans l'ajutage étaient opérationnels pour de faibles débits dans l'ajutage. La plage de tests alors choisie a été la plage des débits dans l'ajutage compris entre 0,1 L/H à 250 L/H

| | Invention | Débitmètre à palette | Flow Switch |
|---|---|---|---|
| Plage de fonctionnement sur pompe doseuse proportionnelle | couvre la plage des débits dans l'ajutage compris entre 0,1 L/H à 250 L/H | Ne couvre pas la plage des débits dans l'ajutage, compris entre 0,1 L/H à 250 L/H | Ne couvre pas la plage des débits dans l'ajutage, compris entre 0,1 L/H à 250 L/H |
| Sensibilité aux poudres | NON | OUI | NON |
| Estimation ou mesure du volume | Estimation | Mesure | Estimation |
| Résistance chimique | OUI | OUI | OUI |

Comme explicité sur dans le tableau précédent, la supervision de la pompe doseuse peut intervenir dans le cas où le débit d'eau en entrée 12 de la pompe doseuse est compris entre 5 L/H et 30 m³/H.

En prenant un très faible dosage à 0,2 % pour un débit en entrée de 5 L/H, il est possible de superviser le fonctionnement du dispositif pour un faible débit dans l'ajutage de 0,02 L/H.

En prenant un dosage à 1 % pour un débit en entrée de 30 m³, il est possible de superviser le fonctionnement du dispositif pour un fort débit dans l'ajutage de 600 L/H.

Cette plage particulièrement large n'était actuellement couverte par aucun autre dispositif, les débitmètres du type à palette ou bien du type « flow switch » fonctionnant dans des plages plus réduites.

De même contrairement à certains dispositifs de mesure de débit sensibles aux particules (risques d'abrasion), le dispositif de l'invention permet grâce à la membrane d'accepter le passage des poudres en solution aqueuse sans se détériorer.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Dispositif de dosage proportionnel supervisé comprenant une pompe doseuse de liquide (1) dotée d'une entrée (12), d'une sortie (13), d'un ajutage (16) d'aspiration muni d'un premier clapet d'aspiration (14) et communiquant en l'une de ses extrémités avec une chambre de mélange intérieure à la pompe et en l'autre de ses extrémités avec un contenant de produit à aspirer, et d'un moteur hydraulique comportant un organe propre à effectuer un mouvement alternatif, l'alimentation de la pompe en liquide en entrée déclenchant le mouvement alternatif de l'organe, lequel mouvement provoquant alternativement une aspiration à travers l'ajutage jusque dans la chambre de mélange avec ouverture du premier clapet d'aspiration (14) lorsque l'organe s'éloigne de l'ajutage (16) puis une expulsion en sortie (13) de la pompe avec fermeture du premier clapet d'aspiration lorsque l'organe se rapproche de l'ajutage, le dispositif de dosage comprenant également un mécanisme (11) pour ajuster le débit dans l'ajutage (16), le dispositif de dosage comprenant en outre un ensemble de moyens de détection, ledit ensemble comptant au moins :
- des moyens (3) pour détecter la variation de pression dans l'ajutage, disposés entre le premier clapet d'aspiration (14) et la chambre de mélange,
- une interface Homme / Machine (4) pour traiter, enregistrer et visualiser les données issues des moyens de détection,
**caractérisé en ce que** l'ensemble de moyens de détection compte en outre:
- une sonde (6) de mesure du niveau du contenant de produit à aspirer,
- des moyens (22) pour déterminer la position du mécanisme d'ajustage de volume à aspirer (11),

2. Dispositif de dosage proportionnel selon la revendication 1, **caractérisé en ce que** le moyens (3) pour détecter la variation de pression dans l'ajutage comprend au moins un premier volume (34) en communication de fluide avec l'intérieur de l'ajutage, un second volume (31) clos et contigu au premier tout en en étant séparé par une membrane souple (33), un capteur (32) de la pression dans le second volume, de sorte que les variations en alimentation en fluide du premier volume induisent des déformations de la membrane, et par voie de conséquence des variations de pression dans le second volume clos.

3. Dispositif de dosage proportionnel selon les revendications 1 ou 2, **caractérisé en ce qu'**il comporte un compteur d'eau (7) en entrée (12) de la pompe doseuse.

4. Dispositif de dosage proportionnel selon l'une des revendications 2 ou 3, **caractérisé en ce qu'**un second clapet d'aspiration (14') est disposé à l'entrée de la chambre de travail.

5. Dispositif de dosage proportionnel selon l'une quelconques des revendications précédentes, **caractérisé en ce que** l'interface Homme / Machine comprend une sortie (42) apte à être connectée à un mécanisme d'alarme.

6. Dispositif de dosage proportionnel selon l'une quelconques des revendications précédentes, **caractérisé en ce que** l'ensemble de moyens de détection comprend un moyen de comptage (5) des cycles du moteur hydraulique.

7. Procédé de supervision d'une pompe doseuse mettant en oeuvre un dispositif de dosage proportionnel conforme à l'une quelconque des revendications 1 à 6, ledit dispositif comprenant un moyen de comptage des cycles du moteur hydraulique et un compteur d'eau (7) en entrée (12) de la pompe doseuse, **caractérisé en ce qu'**il comprend :
- Une étape au cours de laquelle on mesure la position du mécanisme d'ajustage de volume aspiré,
- Une étape ultérieure au cours de laquelle, la pompe étant en fonctionnement, on détermine sur une durée T0, le volume d'eau admis en entrée de la pompe, et la variation de volume de produit dans le contenant,
- Une étape ultérieure dans laquelle on calcule la valeur théorique de produit aspiré sur la durée T0 à partir de la position mesurée pour le mécanisme d'ajustage et du volume d'eau admis en entrée de la pompe,
- Une étape ultérieure dans laquelle on compare la valeur théorique de produit aspiré sur la durée T0 avec la variation de volume de produit dans le contenant.

8. Procédé de supervision d'une pompe doseuse selon la revendication 7, **caractérisé en ce que** la détermination sur une durée T0, du volume d'eau admis en entrée de la pompe s'effectue par une mesure avec le compteur d'eau (7).

9. Procédé de supervision d'une pompe doseuse selon la revendication 7, **caractérisé en ce que** la détermination sur une durée T0, du volume d'eau admis en entrée de la pompe s'effectue par une estimation à partir du moyen de comptage (5) des cycles du moteur hydraulique.

10. Procédé de supervision d'une pompe doseuse selon l'une quelconque des revendications 7 à 9, **caractérisé en ce que** la détermination sur une durée T0, de la variation de volume de produit dans le contenant s'effectue par une mesure avec la sonde (6) de mesure du niveau du contenant.

11. Procédé de supervision d'une pompe doseuse selon l'une quelconque des revendications 7 à 9, **caractérisé en ce que** la détermination sur une durée T0, de la variation de volume de produit dans le contenant s'effectue par une estimation à partir des moyens (3) pour détecter la variation de pression dans l'ajutage.

12. Procédé de supervision d'une pompe doseuse mettant en oeuvre un dispositif de dosage proportionnel conforme à l'une quelconque des revendications 1 à 6, ledit dispositif comprenant un moyen de comptage des cycles du moteur hydraulique et un compteur d'eau (7) en entrée (12) de la pompe doseuse, **caractérisé en ce qu'**il comprend :
- Une étape au cours de laquelle, la pompe étant en fonctionnement, on mesure avec le compteur d'eau (7) sur une durée T0, le volume d'eau admis en entrée de la pompe,
- Une étape au cours de laquelle on estime le volume d'eau admis en entrée de la pompe sur la durée T0 à partir du nombre de cycles comptés pour le moteur hydraulique,
- Une étape ultérieure dans laquelle on compare la valeur estimée du volume d'eau admis en entrée de la pompe sur la durée T0 avec la valeur mesurée.

13. Procédé de supervision d'une pompe doseuse mettant en oeuvre un dispositif de dosage proportionnel conforme à l'une quelconque des revendications 1 à 6, ledit dispositif comprenant un moyen de comptage des cycles du moteur hydraulique, **caractérisé en ce qu'**il comprend :
- Une étape au cours de laquelle, on compte le nombre de cycles du moteur hydraulique, la pompe étant en fonctionnement,
- Une étape au cours de laquelle on détermine le nombre de cycles d'aspiration avec les moyens (3) de détection des variations de pression dans l'ajutage,
- Une étape ultérieure dans laquelle on compare le nombre de cycles du moteur hydraulique avec le nombre de cycles d'aspiration.

14. Procédé de supervision d'une pompe doseuse mettant en oeuvre un dispositif de dosage proportionnel conforme à l'une quelconque des revendications 1 à 6, **caractérisé en ce qu'**il comprend :
- Une étape au cours de laquelle on mesure la position du mécanisme d'ajustage de volume aspiré,
- Une étape au cours de laquelle, la pompe étant en fonctionnement, on estime sur une durée T0 et avec les moyens (3) de détection des variations de pression dans l'ajutage, la variation de volume de produit dans le contenant,

15. Procédé de supervision d'une pompe doseuse selon la revendication précédente, caractérisé en ce en ce qu'il comprend :
- Une étape au cours de laquelle, la pompe étant en fonctionnement, on mesure avec la sonde (16) sur une durée T0, la variation de volume de produit dans le contenant,
- Une étape ultérieure dans laquelle on compare la valeur estimée de produit aspiré sur la durée T0 avec la variation de volume de produit dans le contenant.

16. Procédé de supervision d'une pompe doseuse selon l'une quelconques des revendications 7 à 15, **caractérisé en ce que** le débit d'eau en entrée (12) de la pompe doseuse est compris entre 5 L/H et 30 m³/H, le débit dans l'ajutage (16) étant compris entre 0,02 L/H et 600 L/H.

17. Procédé de supervision d'une pompe doseuse selon l'une quelconques des revendications 7 à 16, **caractérisé en ce qu'**une alarme est déclenchée en cas de non-conformité dans les étapes de comparaison.

## Patentansprüche

1. Vorrichtung zur kontrollierten proportionalen Dosierung, umfassend eine Flüssigkeitsdosierpumpe (1), die mit einem Einlass (12), einem Auslass (13), einem Ansaugstutzen (16), der mit einem ersten Saugventil (14) ausgestattet ist, versehen ist, und kommunizierend an einem ihrer Enden mit einer pumpeninternen Mischkammer und am anderen Ende mit einem Behälter mit anzusaugendem Produkt, und mit einem Hydraulikmotor, der ein Element umfasst, das eine alternative Bewegung ausführen kann, wobei die Versorgung der Pumpe mit Flüssigkeit am Einlass die alternative Bewegung des Elements auslöst, wobei diese Bewegung alternativ einen Saugvorgang durch den Stutzen hindurch bis in die Mischkammer mit Öffnung des ersten Saugventils (14), wenn sich das Element von dem Stutzen (16) entfernt, dann ein Ausstoßen aus dem Auslass (13) der Pumpe mit Schließung des ersten Saugventils, wenn sich das Element dem Stutzen nähert, hervorruft, wobei die Dosierungsvorrichtung auch einen Mechanismus (11) umfasst, um den Durchfluss in dem Stutzen (16) einzustellen, wobei die Dosierungsvorrichtung weiterhin eine Menge von Nachweismitteln umfasst, wobei die Menge wenigstens umfasst:
- Mittel (3) zum Nachweisen der Druckänderung in dem Stutzen, die sich zwischen dem ersten Saugventil (14) und der Mischkammer befinden;
- eine Schnittstelle zwischen Mensch und Maschine (4), um die Daten, die von den Nachweismitteln erzeugt werden, zu verarbeiten, aufzunehmen und sichtbar zu machen;
**dadurch gekennzeichnet, dass** die Menge von Nachweismitteln weiterhin umfasst:
- eine Sonde (6) zum Messen des Pegels des Behälters mit dem anzusaugenden Produkt;
- Mittel (22) zum Bestimmen der Position des Mechanismus zur Einstellung des einzusaugenden Volumens (11).

2. Vorrichtung zur proportionalen Dosierung gemäß Anspruch 1, **dadurch gekennzeichnet, dass** die Mittel (3) zum Nachweisen der Druckänderung in dem Stutzen wenigstens ein erstes Volumen (34) in Fluidkommunikation mit dem Innern des Stutzens, ein zweites, geschlossenes Volumen (31), das an das erste angrenzt, aber zugleich durch eine biegsame Membran (33) davon getrennt ist, einen Sensor (32) für den Druck in dem zweiten Volumen, so dass die Veränderungen der Versorgung des ersten Volumens mit Fluid Verformungen der Membran und folglich Druckveränderungen im zweiten, geschlossenen Volumen induzieren, umfassen.

3. Vorrichtung zur proportionalen Dosierung gemäß Anspruch 1 oder 2, **dadurch gekennzeichnet, dass** sie einen Wasserzähler (7) am Einlass (12) der Dosierpumpe umfasst.

4. Vorrichtung zur proportionalen Dosierung gemäß einem der Ansprüche 2 oder 3, **dadurch gekennzeichnet, dass** sich ein zweites Saugventil (14') am Einlass der Arbeitskammer befindet.

5. Vorrichtung zur proportionalen Dosierung gemäß einem der vorstehenden Ansprüche, **dadurch gekennzeichnet, dass** die Schnittstelle zwischen Mensch und Maschine einen Ausgang (42) umfasst, der mit einem Alarmmechanismus verbunden werden kann.

6. Vorrichtung zur proportionalen Dosierung gemäß einem der vorstehenden Ansprüche, **dadurch gekennzeichnet, dass** die Menge der Nachweismittel ein Mittel zum Zählen (5) der Umdrehungen des Hydraulikmotors umfasst.

7. Verfahren zur Kontrolle einer Dosierpumpe unter Verwendung einer Vorrichtung zur proportionalen Dosierung gemäß einem der Ansprüche 1 bis 6, wobei die Vorrichtung ein Mittel zum Zählen der Umdrehungen des Hydraulikmotors und einen Wasserzähler (7) am Einlass (12) der Dosierpumpe umfasst, **dadurch gekennzeichnet, dass** es umfasst:
- einen Schritt, bei dem man die Position des Mechanismus zum Einstellen des Saugvolumens misst;
- einen Folgeschritt, bei dem man, während die Pumpe arbeitet, über eine Dauer T0 das am Einlass der Pumpe eingelassene Wasservolumen und die Volumenveränderung des Produkts in dem Behälter bestimmt;
- einen Folgeschritt, bei dem man den theoretischen Wert des während der Zeit T0 abgesaugten Produkts ausgehend von der gemessenen Position des Einstellmechanismus und dem am Einlass der Pumpe eingelassenen Wasservolumen berechnet;
- einen Folgeschritt, bei dem man den theoretischen Wert des während der Zeit T0 abgesaugten Produkts mit der Volumenveränderung des Produkts in dem Behälter vergleicht.

8. Verfahren zur Kontrolle einer Dosierpumpe gemäß Anspruch 7, **dadurch gekennzeichnet, dass** die Bestimmung des am Einlass der Pumpe eingelassenen Wasservolumens während einer Zeit T0 durch eine Messung mit dem Wasserzähler (7) erfolgt.

9. Verfahren zur Kontrolle einer Dosierpumpe gemäß Anspruch 7, **dadurch gekennzeichnet, dass** die Bestimmung des am Einlass der Pumpe eingelassenen Wasservolumens während einer Zeit T0 durch eine Schätzung ausgehend von dem Mittel zum Zählen (5) der Umdrehungen des Hydraulikmotors erfolgt.

10. Verfahren zur Kontrolle einer Dosierpumpe gemäß einem der Ansprüche 7 bis 9, **dadurch gekennzeichnet, dass** die Bestimmung der Volumenveränderung des Produkts in dem Behälter während einer Zeit T0 durch eine Messung mit der Sonde (6) zum Messen des Pegels des Behälters erfolgt.

11. Verfahren zur Kontrolle einer Dosierpumpe gemäß einem der Ansprüche 7 bis 9, **dadurch gekennzeichnet, dass** die Bestimmung der Volumenveränderung des Produkts in dem Behälter während einer Zeit T0 durch eine Schätzung ausgehend von den Mitteln (3) zum Nachweisen der Druckänderung in dem Stutzen erfolgt.

12. Verfahren zur Kontrolle einer Dosierpumpe unter Verwendung einer Vorrichtung zur proportionalen Dosierung gemäß einem der Ansprüche 1 bis 6, wobei die Vorrichtung ein Mittel zum Zählen der Umdrehungen des Hydraulikmotors und einen Wasserzähler (7) am Einlass (12) der Dosierpumpe umfasst, **dadurch gekennzeichnet, dass** es umfasst:
- einen Schritt, bei dem man, während die Pumpe arbeitet, über eine Dauer T0 das am Einlass der Pumpe eingelassene Wasservolumen mit dem Wasserzähler (7) bestimmt;
- einen Schritt, bei dem man das am Einlass der Pumpe über die Dauer T0 eingelassene Wasservolumen ausgehend von der Anzahl der für den Hydraulikmotor gezählten Umdrehungen abschätzt;
- einen Folgeschritt, bei dem man den geschätzten Wert des am Einlass der Pumpe über die Dauer T0 eingelassenen Wasservolumens mit dem gemessenen Wert vergleicht.

13. Verfahren zur Kontrolle einer Dosierpumpe unter Verwendung einer Vorrichtung zur proportionalen Dosierung gemäß einem der Ansprüche 1 bis 6, wobei die Vorrichtung ein Mittel zum Zählen der Umdrehungen des Hydraulikmotors umfasst, **dadurch gekennzeichnet, dass** es umfasst:
- einen Schritt, bei dem man, während die Pumpe arbeitet, die Anzahl der Umdrehungen des Hydraulikmotors bestimmt;
- einen Schritt, bei dem man die Anzahl der Saugzyklen mit den Mitteln (3) zum Nachweisen der Druckänderung in dem Stutzen bestimmt;
- einen Folgeschritt, bei dem man die Anzahl der Umdrehungen des Hydraulikmotors mit der Anzahl der Saugzyklen vergleicht.

14. Verfahren zur Kontrolle einer Dosierpumpe unter Verwendung einer Vorrichtung zur proportionalen Dosierung gemäß einem der Ansprüche 1 bis 6, **dadurch gekennzeichnet, dass** es umfasst:
- einen Schritt, bei dem man die Position des Mechanismus zur Einstellung des Saugvolumens misst;
- einen Schritt, bei dem man, während die Pumpe arbeitet, die Volumenveränderung des Produkts in dem Behälter über eine Dauer T0 und mit den Mitteln (3) zum Nachweisen der Druckänderung in dem Stutzen abschätzt.

15. Verfahren zur Kontrolle einer Dosierpumpe gemäß dem vorstehenden Anspruch, **dadurch gekennzeichnet, dass** es umfasst:
- einen Schritt, bei dem man, während die Pumpe arbeitet, mit der Sonde (6) über eine Dauer T0 die Volumenveränderung des Produkts in dem Behälter misst;
- einen Folgeschritt, bei dem man den geschätzten Wert des eingesaugten Produkts über die Dauer T0 mit der Volumenveränderung des Produkts in dem Behälter vergleicht.

16. Verfahren zur Kontrolle einer Dosierpumpe gemäß einem der Ansprüche 7 bis 15, **dadurch gekennzeichnet, dass** der Wasserdurchfluss am Einlass (12) der Dosierpumpe zwischen 5 l/h und 30 m³/h liegt, wobei der Durchfluss am Stutzen (16) zwischen 0,02 l/h und 600 l/h liegt.

17. Verfahren zur Kontrolle einer Dosierpumpe gemäß einem der Ansprüche 7 bis 16, **dadurch gekennzeichnet, dass** im Falle der Nichtübereinstimmung in den Vergleichsschritten ein Alarm ausgelöst wird.

## Claims

1. A monitored proportional metering device comprising a liquid metering pump (1) provided with an inlet (12), with an outlet (13), with an intake nozzle (16) equipped with a first intake valve (14) and communicating, at one of its ends, with a mixing chamber internal to the pump and, at the other of its ends, with a container of product to be drawn in, and with a hydraulic motor comprising a member capable of effecting a reciprocating movement, the supply of liquid to the pump inlet triggering the reciprocating movement of the member, this movement alternately causing intake through the nozzle as far as the mixing chamber with opening of the first intake valve (14) when the member is moving away from the nozzle (16) followed by expulsion at the pump outlet (13) with closure of the first intake valve when the member is moving closer to the nozzle, the metering device also comprising a mechanism (11) for adjusting the flow rate in the nozzle (16), the metering device further comprising a set of detection means, said set including at least:
- means (3) for detecting the variation in pressure in the nozzle, which means are arranged between the first intake valve (14) and the mixing chamber,
- a man/machine interface (4) for processing, recording and displaying the data derived from the detection means,
**characterized in that** the set of detection means further comprises:
- a probe (6) for measuring the level in the container of product to be drawn in,
- means (22) for determining the position of the intake-volume adjustment mechanism (11),

2. The proportional metering device as claimed in claim 1, **characterized in that** the means (3) for detecting the variation in pressure in the nozzle comprises at least a first volume (34) in fluidic communication with the inside of the nozzle, a closed second volume (31) contiguous with the first while at the same time being separated therefrom by a flexible membrane (33), a sensor (32) of the pressure in the second volume so that the variations in supply of fluid to the first volume give rise to deformations of the membrane and, as a consequence, to variations in pressure in the closed second volume.

3. The proportional metering device as claimed in claims 1 or 2, **characterized in that** it comprises a water meter (7) at the inlet (12) of the metering pump.

4. The proportional metering device as claimed in one of claims 2 and 3, **characterized in that** a second intake valve (14') is arranged at the inlet of the working chamber.

5. The proportional metering device as claimed in any one of the preceding claims, **characterized in that** the man/machine interface comprises an output (42) able to be connected to an alarm mechanism.

6. The proportional metering device as claimed in any one of the preceding claims, **characterized in that** the set of detection means comprises a means (5) of counting the cycles of the hydraulic motor.

7. A method for monitoring a metering pump employing a proportional metering device as claimed in any one of claims 1 to 6, said device comprising a means of counting the cycles of the hydraulic motor and an inlet water meter (7) at the inlet (12) of the metering pump, **characterized in that** it comprises:
- a step during which the position of the intake volume adjustment mechanism is measured,
- a later step during which, with the pump running, the volume of water admitted at the inlet of the pump, and the variation in volume of product in the container are determined over a duration T0,
- a later step in which the theoretical value of product drawn in over the duration T0 is calculated from the measured position of the adjusting mechanism and from the volume of water admitted at the inlet of the pump,
- a later step in which the theoretical value of product drawn in over the duration T0 is compared with the variation in volume of product in the container.

8. The method of monitoring a metering pump as claimed in claim 7, **characterized in that** the volume of water admitted at the inlet of the pump over a duration T0 is determined by measurement using the water meter (7).

9. The method of monitoring a metering pump as claimed in claim 7, **characterized in that** the volume of water admitted at the inlet of the pump over a duration T0 is determined by an estimation made by the means (5) of counting the cycles of the hydraulic motor.

10. The method of monitoring a metering pump as claimed in any one of claims 7 to 9, **characterized in that** the variation in volume of product in the container over a duration T0 is determined by measurement using the probe (6) for measuring the level in the container.

11. The method of monitoring a metering pump as claimed in any one of claims 7 to 9, **characterized in that** the variation in volume of product in the container over a duration T0 is determined by estimation using the means (3) for detecting the variation in pressure in the nozzle.

12. A method for monitoring a metering pump employing a proportional metering device as claimed in any one of claims 1 to 6, said device comprising a means of counting the cycles of the hydraulic motor and an inlet water meter (7) at the inlet (12) of the metering pump, **characterized in that** it comprises:
- a step during which, with the pump running, the volume of water admitted at the inlet of the pump over a duration T0 is measured using the water meter (7),
- a step during which the volume of water admitted at the inlet of the pump over the duration T0 is estimated from the number of cycles counted for the hydraulic motor,
- a later step in which the estimated value of the volume of water admitted at the inlet of the pump over the duration T0 is compared with the measured value.

13. A method for monitoring a metering pump employing a proportional metering device as claimed in any one of claims 1 to 6, said device comprising a means of counting the cycles of the hydraulic motor, **characterized in that** it comprises:
- a step during which the number of cycles of the hydraulic motor with the pump running is counted,
- a step during which the number of intake cycles is determined using the means (3) of detecting variations in pressure in the nozzle,
- a later step in which the number of cycles of the hydraulic motor is compared with the number of intake cycles.

14. A method of monitoring a metering pump employing a proportional metering device as claimed in any one of claims 1 to 6, **characterized in that** it comprises:
- a step during which the position of the intake volume adjustment mechanism is measured,
- a step during which, with the pump running, the variation in volume of product in the container is estimated over a duration T0 and using the means (3) of detecting variations in pressure in the nozzle.

15. The method of monitoring a metering pump as claimed in the preceding claim, **characterized in that** it comprises:
- a step during which, with the pump running, the variation in volume of product in the container is measured with the probe (6) over a duration T0,
- a later step in which the estimated value of product drawn in over the duration T0 is compared with the variation in volume of product in the container.

16. The method of monitoring a metering pump as claimed in any one of claims 7 to 15, **characterized in that** the flow rate of water at the inlet (12) of the metering pump is comprised between 5 1/h and 30 m³/h, the flow rate in the nozzle (16) being comprised between 0.02 1/h and 600 l/h.

17. The method of monitoring a metering pump as claimed in any one of claims 7 to 16, **characterized in that** an alarm is triggered in the event of nonconformity in the comparison steps.
